# EUROPÄISCHE PATENTSCHRIFT

(11) **EP 2 475 490 B1**
(45) Veröffentlichungstag und Bekanntmachung des Hinweises auf die Patenterteilung: **16.11.2016**
(21) Anmeldenummer: 10760216.1
(22) Anmeldetag: 10.09.2010
(51) Int. Cl.: B23K 9/10

(54) **VERFAHREN ZUR ENERGIEUMWANDLUNG SOWIE SCHWEIßGERÄT**
ENERGY CONVERSION METHOD AND WELDING DEVICE
PROCÉDÉ DE CONVERSION D'ÉNERGIE ET APPAREIL DE SOUDAGE

(30) Priorität: 10.09.2009 AT 14272009
(43) Veröffentlichungstag der Anmeldung: 18.07.2012
(73) Patentinhaber: Fronius International GmbH, 4643 Pettenbach (AT)
(72) Erfinder: MAGERL, Christian, A-3921 Langschlag (AT); BINDER, Jürgen, 4644 Scharnstein (AT); STIEGLBAUER, Walter, A-4901 Manning (AT); ARTELSMAIR, Bernhard, A-4643 Pettenbach (AT)
(74) Vertreter: Sonn & Partner Patentanwälte
(86) Internationale Anmeldenummer: PCT/AT2010/000327
(87) Internationale Veröffentlichungsnummer: WO 2011/029117

(56) Entgegenhaltungen:
- EP-A1- 1 364 737
- EP-A2- 0 949 751
- US-A1- 2007 181 547

## Beschreibung

Die Erfindung betrifft ein Verfahren zum Betreiben eines Schweißgeräts zur Bildung eines Lichtbogens mit einem Energiespeicher nach dem Oberbegriff des Patentanspruchs 1.

Die Erfindung betrifft weiters ein Schweißgerät mit einem Energiespeicher nach dem Oberbegriff des Patentanspruchs 4.

Um die Mobilität zu erhöhen, ist es allgemein bekannt, als Stromversorgung Energiespeicher zur Versorgung der Elektronik bzw. Leistungselektronik eines entsprechenden Geräts mit elektronischer Energie zu verwenden, sodass die Anwendung mit dem Gerät ausgeführt werden kann. Durch die begrenzte Energie des Energiespeichers muss dieser regelmäßig aufgeladen werden.

Der Einsatz von Energiespeichern bei Geräten zur Metallbearbeitung, wie bei Schweißgeräten, ist beispielsweise aus den Dokumenten DE 26 50 522 A1 und GB 2 316 244 A bekannt.

Die US 2005/0109748 A1 beschreibt ein Schweißgerät mit einem Energiespeicher zur Erzeugung der Schweißenergie bzw. des Lichtbogens. Die Spannung des Energiespeichers wird mit einem Hochsetzsteller auf eine Zwischenspannung transformiert, welche wiederum durch einen nachgeschalteten Tiefsetzsteller auf die für den Lichtbogen erforderliche Spannung herabgesetzt wird. Der Energiespeicher kann mit einem Ladegerät geladen werden. Das Ladegerät bildet eine eigenständige Einheit, welche entweder im Schweißgerät integriert oder als externe Einheit mit dem Energiespeicher verbunden werden kann. Nachteilig ist hierbei, dass die Energie für den Lichtbogen in zwei Schritten erzeugt wird, wodurch Schaltverluste sowohl im Hochsetzsteller als auch im Tiefsetzsteller auftreten, und dadurch der Wirkungsgrad gesenkt wird. Zusätzlich muss der Tiefsetzsteller die hochtransformierte Zwischenspannung auf die Höhe der gewünschten Lichtbogenspannung umwandeln, sodass aufgrund des größeren Spannungsunterschieds die Schaltverluste erhöht werden.

Die EP 0 949 751 A2 beschreibt einen Wandler für Schweißgeräte bei dem die Schalter eines Tiefsetzstellers entsprechend ein- und ausgeschaltet werden. Die Verwendung eines batteriebetriebenen Schweißgerätes ist nicht geoffenbart.

Die US 2007/181547 A1 beschreibt ein batteriebetriebenes Schweißgerät mit einer Schaltung zum Laden des Energiespeichers.

Die Aufgabe der vorliegenden Erfindung besteht in der Schaffung eines oben genannten Verfahrens zum Betreiben eines Schweißgeräts und eines oben genannten Schweißgeräts, durch welche die durch den Energiespeicher begrenzt zur Verfügung stehende Energie mit minimalen Schaltverlusten dem Lichtbogen zur Verfügung gestellt werden kann und durch welche dem Benutzer eine optimale Energieverwaltung zur Nutzung der begrenzten Energie des Energiespeichers zur Verfügung gestellt werden kann. Nachteile bekannter Verfahren oder Vorrichtungen sollen vermieden oder zumindest reduziert werden.

Die Aufgabe der Erfindung wird durch ein oben genanntes Verfahren zum Betreiben eines Schweißgeräts zur Bildung eines Lichtbogens mit einem Energiespeicher gelöst, bei dem als Tiefsetzsteller zum Betreiben des Lichtbogens mit einem Ausgangsstrom ein Synchronwandler verwendet wird, wobei der Ausgangsstrom über eine Drossel geleitet wird, und der zumindest eine Schalter des als Leistungsteil ausgebildeten Synchronwandlers ausgangsseitig mit einer Entlastungsschaltung verbunden wird, sodass zumindest der Schalter entlastet ein- und ausgeschaltet wird, indem beim Einschaltvorgang des zumindest einen Schalters um die Drossel wieder zu laden der Stromanstieg durch eine in Serie zum Schalter angeordnete Drossel begrenzt sowie die Drossel geladen wird und die Spannung am ausgangsseitigen Anschluss der Drossel bis zur Spannung des Energiespeichers ansteigt, nach dem Einschaltvorgang eines durch einen Schalter gebildete Steuereinheit aktiviert wird und zumindest ein ausgangsseitig dem Schalter zugeordneter Kondensator während des eingeschalteten Schalters auf die Spannung des Energiespeichers und ein ausgangsseitig des Schalters angeordneter Kondensator über eine Drossel geladen wird, nach vollständiger Ladung des dem Schalter ausgangseitig zugeordneten Kondensators der Schalter geöffnet wird, worauf der Kondensator mit der in der Drossel gespeicherten Energie bis zur Spannung des Energiespeichers geladen wird, beim Ausschaltvorgang des zumindest einen Schalters bei deaktiviertem Schalter der Steuereinheit die ausgangsseitig am Schalter anliegende Spannung über den Kondensator im Wesentlichen auf der Spannung des Energiespeichers gehalten wird, sodass der zumindest eine Schalter im Wesentlichen spannungsfrei ausgeschaltet wird, und die Energie der Drossel und des Kondensators dem Ausgangsstrom zugeführt wird. Durch die Ausführung der Entlastungsschaltung mit Speicherkomponenten wird eine äußerst effiziente Nutzung der Energie des Energiespeichers erreicht, da durch die Speicherkomponenten die Energie während des Umschaltens zwischengespeichert und in weiterer Folge dem Lichtbogen zugeführt wird. Somit geht im Wesentlichen keine Energie verloren. Durch die direkte Verbindung des Synchronwandlers mit dem Energiespeicher können die Verluste noch weiter minimiert werden, sodass ein sehr hoher Wirkungsgrad resultiert. Durch das Auftreten minimaler Schaltverluste in dem zumindest einen Schalter des Synchronwandlers können Wirkungsgrade im Bereich von 99% resultieren. Durch die reduzierten Verluste resultiert ebenso eine sehr geringe Wärmeentwicklung, sodass ein sehr kleiner Lüfter ausreicht bzw. insbesondere bei kleineren Leistungen bereits durch Konvektion die erforderliche Kühlung erreicht wird. Dementsprechend ist für den Leistungsteil ein sehr geringer Platzbedarf ausreichend, welcher im Vergleich zum Platzbedarf des Energiespeichers meist nicht relevant ist.

Die Steuereinheit wird durch einen Schalter gebildet, welcher ausgangsseitig zumindest mit einem Kondensator und einer Diode verbunden wird, sodass der Schalter entlastet deaktiviert wird.

Während des eingeschalteten Schalters und deaktivierter Steuereinheit wird zumindest eine Speicherkomponente der Entlastungsschaltung für einen entlasteten Einschaltvorgang des Schalters von zumindest einer weiteren Speicherkomponente der Entlastungsschaltung vollständig geladen.

Durch die Maßnahmen beim Einschaltvorgang und währenddessen wird in vorteilhafter Weise erreicht, dass durch den Schalter lediglich ein sehr geringer Strom fließt und somit minimale Schaltverluste resultieren. Ebenso wird der Schalter beim Einschaltvorgang durch die Entlastungsschaltung im Wesentlichen nicht beeinflusst, da diese bzw. die Steuereinheit erst nach dem Einschaltvorgang aktiviert wird. Dabei werden die Speicherkomponenten kontrolliert geladen, sodass eine optimale Schaltentlastung möglich ist. Des Weiteren wird bei der Ladung der Speicherkomponenten die zwischengespeicherte Energie effizient genutzt, indem damit teilweise andere Speicherkomponenten geladen werden.

Beim Ausschaltvorgang des Schalters des Synchronwandlers wird vorzugsweise zumindest ein Teil der Speicherkomponenten der Entlastungsschaltung mit dem Ausschaltvorgang des Schalters selbstständig aktiv.

Mit dem Ausschaltvorgang wird gemäß einem weiteren Merkmal der Erfindung zumindest eine Speicherkomponente der Entlastungsschaltung für den Einschaltvorgang eines Schalters zum Ausgang des Synchronwandlers entladen. Durch die Maßnahmen, dass beim Ausschaltvorgang, und währenddessen im Wesentlichen ohne Zeitverzögerung die Entlastungsschaltung aktiv wird, können die Schaltverluste minimal gehalten werden. Ebenso wird der Spannungsabfall am Schalter sehr gering gehalten, sodass minimale Schaltverluste resultieren. Auch ist vorteilhaft, dass die Einschaltentlastung für den nächsten Einschaltvorgang gewährleistet wird. Dabei wird zusätzlich die zwischengespeicherte Energie dem Lichtbogen am Ausgang zur Verfügung gestellt.

Von Vorteil ist des Weiteren, wenn der Synchronwandler, auch zum Laden des Energiespeichers als Hochsetzsteller eingesetzt wird, indem der Eingang und der Ausgang des Synchronwandlers vertauscht werden. Dadurch sind zum Laden des Energiespeichers keine zusätzlichen Komponenten erforderlich.

Die Aufgabe der Erfindung wird auch durch ein oben genanntes Schweißgerät mit einem Energiespeicher gelöst, wobei der Tiefsetzsteller durch einen Synchronwandler zur Bildung eines über eine Drossel geführten Ausgangsstroms zum Betreiben des Lichtbogens gebildet ist, und der zumindest eine Schalter des als Leistungsteil ausgebildeten Synchronwandlers ausgangsseitig mit einer Entlastungsschaltung mit Speicherkomponenten zum entlasteten Ein- und Ausschalten des zumindest einen Schalters verbunden ist, wobei zur Entlastung des Einschaltvorganges des zumindest einen Schalters um die Drossel wieder zu laden, eine mit dem Schalter in Serie geschaltete Drossel und zur Entlastung des Ausschaltvorganges des zumindest einen Schalters eine mit dem zumindest einen Schalter verbundene Diode und ein Kondensator, welche mit einer durch einen Schalter gebildete Steuereinheit verbunden sind, vorgesehen sind, wobei ausgangsseitig des Schalters eine Drossel und ein Kondensator angeordnet sind, und der Schalter mit der Steuervorrichtung verbunden ist und derart regelbar ist, dass der zumindest eine Schalter entlastet ein- und ausschaltbar ist, wobei nach dem Einschaltvorgang der Schalter der Steuereinheit aktiviert wird, der ausgangsseitig dem Schalter zugeordnete Kondensator während des eingeschalteten Schalters auf die Spannung des Energiespeichers und ein ausgangsseitig des Schalters angeordneter Kondensator über eine Drossel geladen wird, nach vollständiger Ladung des dem Schalter ausgangsseitig zugeordneten Kondensators der Schalter geöffnet wird, worauf der Kondensator mit der in der Drossel gespeicherten Energie bis zur Spannung des Energiespeichers geladen wird, beim Ausschaltvorgang des zumindest einen Schalters bei deaktiviertem Schalter der Steuereinheit die ausgangsseitig am Schalter anliegende Spannung über den Kondensator im Wesentlichen auf der Spannung des Energiespeichers gehalten wird, sodass der zumindest eine Schalter im Wesentlichen spannungsfrei ausgeschaltet wird, und die Energie der Drossel und des Kondensators dem Ausgangsstrom zugeführt wird. Die sich daraus ergebenden Vorteile können aus den bereits oben beschriebenen Vorteilen und der nachfolgenden Beschreibung entnommen werden.

Vorteilhafterweise ist eine Einrichtung zum Laden des Energiespeichers vorgesehen und diese durch den Synchronwandler mit vertauschtem Eingang und Ausgang gebildet, sodass der Synchronwandler zum Laden des Energiespeichers als Hochsetzsteller verwendbar ist.

Zur Anzeige des Ladezustands des Energiespeichers kann vorzugsweise an einer Ein- und/oder Ausgabevorrichtung eine Leuchtdiode vorgesehen sein.

Weiters kann wiederum vorzugsweise an einer Ein- und/oder Ausgabevorrichtung ein Einstellorgan zum Ein- und Ausschalten der Ladeeinrichtung vorgesehen sein.

Die vorliegende Erfindung wird anhand der beigefügten, schematischen Zeichnungen näher erläutert. Darin zeigen:
- Fig. 1: eine schematische Darstellung eines Schweißgeräts;
- Fig. 2: ein schematisches Blockschaltbild zur Durchführung der erfindungsgemäßen entlasteten Umschaltvorgänge;
- Fig. 3: ein Schaltbild eines erfindungsgemäß ausgebildeten Leistungsteils eines Schweißgeräts; und
- Fig. 4: und 5 schematische Darstellungen einer Ein- und/oder Ausgabevorrichtung eines Schweißgeräts.

Einführend wird festgehalten, dass gleiche Teile des Ausführungsbeispiels mit gleichen Bezugszeichen versehen werden.

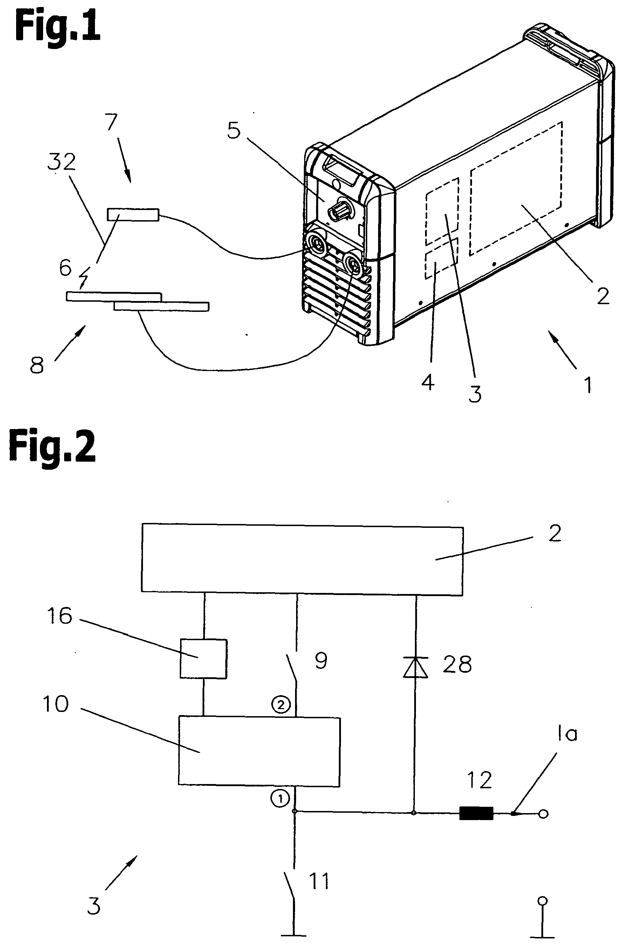

In Fig. 1 ist ein Gerät 1 gezeigt, welches zumindest einen Energiespeicher 2, einen Leistungsteil 3, eine Steuervorrichtung 4 und eine Ein- und/oder Ausgabevorrichtung 5 umfasst. Das Gerät 1 ist zur Bildung eines Lichtbogens 6 ausgebildet, welcher von der Steuervorrichtung 4 geregelt wird. Somit kann das Gerät 1 beispielsweise als Schweißgerät, Schneidgerät, Reinigungsgerät oder Lötgerät eingesetzt werden. Auf Details derartiger Geräte 1, wie beispielsweise die Kühlung eines Brenners 7, wird nicht näher eingegangen, da dies allgemein aus dem Stand der Technik bekannt ist.

Der Strom für den Lichtbogen 6 wird zwischen einer im Brenner 7 angeordneten bzw. mit einem Elektrodenhalter gehaltenen Elektrode 32 und einem Werkstück 8 aufgebaut. Das Werkstück 8, welches aus mehreren Teilen gebildet ist, ist dazu ebenfalls mit dem Gerät 1 verbunden. Entsprechend wird der Strom vom Leistungsteil 3 zur Verfügung gestellt, welcher vom Energiespeicher 2 versorgt wird. Des Weiteren können der Strom und gegebenenfalls weitere Parameter an der Ein- und/oder Ausgabevorrichtung 5 eingestellt bzw. geregelt werden. Dazu ist die Ein- und/oder Ausgabevorrichtung 5 mit der Steuervorrichtung 4 verbunden. Bevorzugt ist der Leistungsteil 3 am Ausgang mit Anschlüssen bzw. Buchsen versehen, über welche der Brenner 7 bzw. das Werkstück 8 verbunden werden kann. Somit wandelt der Leistungsteil 3 die im Energiespeicher 2 gespeicherte Energie derart um, dass beispielsweise ein Schweißprozess durchgeführt werden kann, wie im folgenden Ausführungsbeispiel beschrieben wird.

Erfindungsgemäß wird die durch den Energiespeicher 2 begrenzt zur Verfügung stehende Energie mit minimalen Schaltverlusten dem Lichtbogen 6 zur Verfügung gestellt, indem als Leistungsteil 3 ein Tiefsetzsteller zum Betreiben des Lichtbogens 6 verwendet wird und die Umschaltvorgänge zumindest eines mit dem Energiespeicher 2 verbundenen Schalters 9 des Tiefsetzstellers entlastet durchgeführt werden. Dazu wird in den Tiefsetzsteller eine Entlastungsschaltung 10 zur Durchführung entlasteter Umschaltvorgänge integriert.

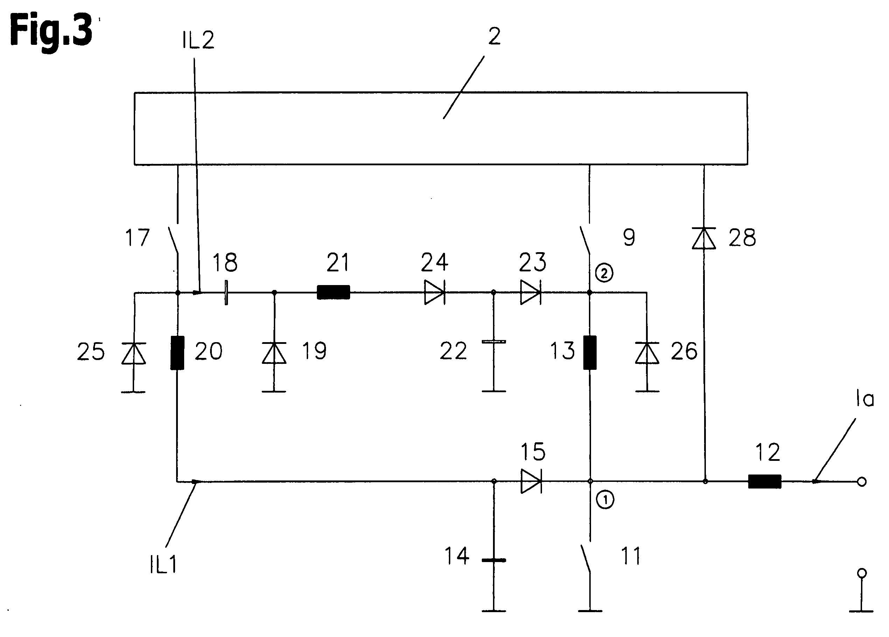

Der erfindungsgemäße Leistungsteil 3 mit der integrierten Entlastungsschaltung 10 wird nun im Folgenden anhand der Fig. 2 und 3 beschrieben. Die Grundkomponenten des Tiefsetzstellers sind die Schalter 9 und 11 und die Drossel 12. Dabei spricht man auch von einem Synchronwandler, welcher als Synchrontiefsetzsteller eingesetzt wird. Um damit effizient, also mit einem Wirkungsgrad im Bereich von 99%, die Energie für den Lichtbogen 6 erzeugen zu können, wird der Schalter 9 erfindungsgemäß derart mit der Entlastungsschaltung 10 beschaltet, dass sowohl eine Einschaltentlastung bei den Einschaltvorgängen als auch eine Ausschaltentlastung bei den Ausschaltvorgängen resultiert. Dadurch wird äußerst wenig Energie in Wärme umgewandelt und es ist daher eine minimale Kühlung der Elektronik des Leistungsteils 3 erforderlich. Somit wird auch der Platzbedarf des Leistungsteils 3 auf ein Minimum reduziert.

In diesem Ausführungsbeispiel wird die Entlastungsschaltung 10 mit Speicherkomponenten, wie Kondensatoren und Drosseln, sowie Dioden realisiert. Allgemein regeln die Dioden die Stromrichtungen, wodurch die Energie des Energiespeichers 2 mit minimalen Schaltverlusten bei den Umschaltvorgängen zumindest des Schalters 9 in die für den Lichtbogen 6 eines Schweißprozesses, Schneidprozesses oder Reinigungsprozesses erforderliche Energie umgewandelt werden kann.

Die Einschaltentlastung ist dabei in zwei Beschaltungen unterteilt, wobei eine erste Beschaltung durch die Drossel 13 in Serie zum Schalter 9 gebildet ist und eine zweite Beschaltung durch den Kondensator 14 und die Diode 15 besteht. Die zweite Beschaltung wird von einer Steuereinheit 16 aktiv geregelt. Die erste Beschaltung wird indirekt über die zweite Beschaltung aktiv geregelt, sodass in Summe eine aktive Einschaltentlastung resultiert.

Die Steuereinheit 16 wird in ihrer einfachsten Form durch einen Schalter 17 gebildet, welcher wie der Schalter 9 eingangsseitig mit dem Energiespeicher 2 verbunden ist. In diesem Fall wird auch der Schalter 17 entsprechend entlastet. Konkret erfolgt über den Kondensator 18 und die Diode 19 eine Ausschaltentlastung und über die Drossel 20 und die Drossel 21 eine Einschaltentlastung.

Die Ausschaltentlastung für den Schalter 9 erfolgt ähnlich wie für den Schalter 17 über den Kondensator 22 und die Diode 23. Dabei verhindert die Diode 23 während des eingeschalteten Schalters 9 eine unkontrollierte Ladung des Kondensators 22 über den Schalter 9.

Eine Entlastung für den Schalter 11 ist nicht erforderlich, da dies automatisch aus dem grundsätzlichen Funktionsprinzip des Synchrontiefsetzstellers resultiert, wie allgemein aus dem Stand der Technik bekannt.

Die Funktion der Einschalt- und Ausschaltentlastung bei den Umschaltvorgängen, welche von der Steuervorrichtung 4 des Schweißgeräts 1 gemäß der Regelung des Synchronwandlers aktiv geregelt werden, wird ausgehend von folgender Ausgangssituation im Detail beschrieben:
Schalter 9 offen; Schalter 11 geschlossen; Kondensatoren 14, 18 und 22 sowie die Drosseln 20, 21 und 13 entladen.

Gemäß dieser Ausgangssituation wird der Ausgangsstrom Ia bzw. die Schweißenergie über den durch den Schalter 11 und die Drossel 12 gebildeten Stromkreis geliefert, wobei die Spannung am Schalter 11 im Wesentlichen Null ist. Demnach wird die Drossel 12 entladen. Damit im nächsten Schritt die Drossel 12 wieder geladen wird, wird der Schalter 9 eingeschaltet und der Schalter 11 entlastet ausgeschaltet.

Beim Einschalten des Schalters 9 wirkt erfindungsgemäß die Einschaltentlastung, sodass im Einschaltaugenblick nur die Eigenkapazität des Schalters 9 umgeladen werden muss. Dadurch resultieren lediglich geringe, fast vernachlässigbare Einschaltverluste. Erreicht wird dies durch die in Serie zum Schalter 9 geschaltete Drossel 13, welche den Stromanstieg im Einschaltaugenblick derart begrenzt, dass der Stromanstieg kontinuierlich entsprechend der Dimensionierung der Drossel 13 erfolgt. Somit werden die minimalen Schaltverluste nur durch einen Bruchteil des Ausgangsstroms Ia verursacht.

Dieser Stromanstieg setzt sich solange fort, bis der Strom durch die Drossel 13 so groß wie der Ausgangsstrom Ia ist. Das heißt, dass der Ausgangsstrom Ia durch die Strombegrenzung zeitverzögert vollständig durch den Schalter 9 zum Ausgang fließt. Somit fließt kein Strom mehr über eine parallel zum Schalter 11 geschaltete Diode 15 zum Ausgang, sodass eine Kapazität 14 parallel zum Schalter 11 umgeladen wird. Im einfachsten Fall sind diese Diode 15 und diese Kapazität 14 Teil eines Leistungstransistors, welcher den Schalter 11 bildet. Dabei erfolgt die Umladung über die in Serie zu dieser Kapazität 14 geschaltete Drossel 13. Dies bewirkt, dass die Spannung am Knotenpunkt K1 zeitverzögert und kontinuierlich bzw. langsam bis zur Versorgungsspannung - also der Spannung des Energiespeichers 2 - ansteigt.

Durch diese langsame Spannungserhöhung werden des Weiteren sowohl am Schalter 9 als auch am Schalter 11 Spannungsspitzen vermieden, sodass ein kurzzeitiges, ungewolltes Umschalten des Schalters 9 bzw. 11 verhindert wird. Insbesondere wird verhindert, dass bei eingeschaltetem Schalter 9 auch der Schalter 11 eingeschaltet wird. Hierbei wird von einer sogenannten "Leitend-Phase" gesprochen, in welcher die Schweißenergie direkt vom Energiespeicher 2 geliefert wird. Dies ist der Fall, wenn am Knotenpunkt K1 die Versorgungsspannung anliegt.

Während der "Leitend-Phase" müssen entsprechende Vorbereitungen für die folgende Ausschaltentlastung und ebenso für die nächste Einschaltentlastung getroffen werden. In einer während der "Leitend-Phase" stattfindenden "Auflade-Phase" werden die Kondensatoren 14, 18 und 22 geladen, indem die Steuereinheit 16 aktiviert, also der Schalter 17 eingeschaltet wird. Der erste mögliche Zeitpunkt zur Aktivierung der Steuereinheit 16 ist jener, wenn am Knotenpunkt K1 die Versorgungsspannung anliegt. Der Schalter 17 bleibt solange eingeschaltet, bis am Kondensator 14 die halbe Versorgungsspannung anliegt. Des Weiteren werden die kleiner als der Kondensator 14 dimensionierten Kondensatoren 22 und 18 während dieser Zeit über die Drossel 21 und die Diode 24 vollständig geladen. Diese Drossel 21 und Diode 24 sind zwischen dem Kondensator 18 und dem Kondensator 22 angeordnet, sodass beide Kondensatoren 18, 22 mit dem selben Ladestrom IL2 geladen werden. Dabei regelt die Drossel 21 die Ladezeit der gleich großen Kondensatoren 18 und 22, sodass diese gleichzeitig und identisch auf die Versorgungsspannung geladen werden. Die Kondensatoren 18 und 22 werden dabei höchstens in einer Zeit geladen, welche zum Erreichen der halben Versorgungsspannung am Kondensator 14 erforderlich ist. Dementsprechend erfolgt die Dimensionierung der Drossel 21. Des Weiteren bewirken die Drossel 21 und die Diode 24, dass beim Laden der Kondensatoren 18 und 22 diese in Serie geschaltet sind. Zur Erfüllung der Ausschaltentlastung arbeiten hingegen der Kondensator 18 und die Diode 19 bzw. der Kondensator 22 und die Diode 23 unabhängig voneinander.

Während dieser Zeit wird ebenso in der in Serie zum Schalter 17 geschalteten Drossel 20 entsprechend dem Ladestrom IL1 des Kondensators 14 Energie gespeichert.

Der Schalter 17 wird ausgeschaltet, nachdem die Kondensatoren 18 und 22 vollständig geladen wurden und am Kondensator 14 die halbe Versorgungsspannung anliegt. Der geladene Kondensator 18 und die Diode 19 dienen dabei als Ausschaltentlastung für den Schalter 17, da durch den Kondensator 18 im Schaltaugenblick die Versorgungsspannung auch ausgangsseitig des Schalters 17 anliegt und dadurch der Schalter 17 im Wesentlichen spannungsfrei bzw. ohne Potentialunterschied ausgeschaltet bzw. geöffnet werden kann. Die vollständige Entladung des Kondensators 18 erfolgt anschließend über die Drossel 20 zum Kondensator 14 bzw. zum Ausgang. Somit geht durch die Drossel 21, die Diode 19 und die Diode 25 diese zwischengespeicherte Energie nicht verloren. Der Kondensator 18 wird entladen, während der Kondensator 22 weiterhin auf der Versorgungsspannung gehalten wird.

Mit dem Ausschalten des Schalters 17 wird der Kondensator 14 mit der in der Drossel 20 gespeicherten Energie bis zur Versorgungsspannung aufgeladen. Dies erfolgt über den durch die Drossel 20, den Kondensator 14 und die Diode 25 gebildeten Stromkreis. Die Drossel 20 ist derart dimensioniert, dass während der Einschaltzeit des Schalters 17 genügend Energie gespeichert wird, um bei ausgeschaltetem Schalter 17 den Kondensator 14 auf die Versorgungsspannung aufzuladen.

Schließlich ist mit dem Erreichen der Versorgungsspannung am Kondensator 14 auch die "Auflade-Phase" während der "Leitend-Phase" beendet. Somit kann auch die "Leitend-Phase" beendet werden, da die Ausschaltentlastung für den Schalter 9 gewährleistet ist. Zusätzlich ist auch die Entnahme der Energie aus der Drossel 13 gewährleistet, sodass im Wesentlichen gleichzeitig mit dem Ausschalten des Schalters 9 auch die Einschaltentlastung für den nächsten Einschaltvorgang des Schalters 9 zur Verfügung steht.

Beim Ausschalten des Schalters 9 erfolgt die Ausschaltentlastung wie beim Schalter 17, indem durch den geladenen Kondensator 22 und über die Diode 23 auch ausgangsseitig am Schalter 9 bzw. am Knotenpunkt K2 die Versorgungsspannung zur Verfügung steht, sodass im Wesentlichen kein Spannungsabfall bzw. Potentialunterschied am Schalter 9 resultiert und dieser daher nahezu verlustfrei ausgeschaltet werden kann.

Somit fließt auch kein Strom mehr vom Energiespeicher 2 über den Schalter 9 in die Drossel 13, sodass auch die darin gespeicherte Energie im Wesentlichen vollständig entladen werden kann. Dies erfolgt derart, dass durch das vollständige Entladen des Kondensators 22 die Spannung am Knotenpunkt K2 kontinuierlich über die Diode 23 zum Ausgang sinkt. Ebenso wird mit dem Ausschalten des Schalters 9 auch der Kondensator 14 entladen, welcher die Spannung am Knotenpunkt K1 beeinflusst. Dabei sinkt die Spannung am Knotenpunkt K1 durch den gegenüber dem Kondensator 22 größeren Kondensator 14 langsamer als am Knotenpunkt K2. Dadurch wird auf der Drossel 13 eine sogenannte negative Spannungs-Zeit-Fläche aufgebracht, wodurch der Strom durch die Drossel 13 sinkt, da sich die Polarität der Spannung an der Drossel 13 aufgrund des früher entladenen Kondensators 22 umkehrt. Somit ist das Potential am Knotenpunkt K2 bzw. ausgangsseitig des Schalters 9 nach dem Entladen des Kondensators 22 im Wesentlichen Null, wobei dieses Potential am Knotenpunkt K2 durch die Diode 26 gehalten wird. Die negative Spannungs-Zeit-Fläche an der Drossel 13 bewirkt dabei, dass der aus der Entladung der Drossel 13 resultierende Strom dem Ausgang zugeführt wird. Somit wird die Energie der Drossel 13 und des Kondensators 14 im Wesentlichen ohne Verluste dem Ausgangsstrom Ia zugeführt. Somit steht die Einschaltentlastung für den nächsten Einschaltvorgang des Schalters 9 wieder zur Verfügung. Entsprechend wird mit dem Ausschalten des Schalters 9 wiederum der Schalter 11 eingeschaltet, sodass der Ausgangsstrom Ia nicht unterbrochen wird. Konkret erfolgt dies, wenn am Knotenpunkt K1 die Spannung im Wesentlichen auf Null gesunken ist. Somit ist die Einschaltentlastung gegeben. Demnach ist wieder die Ausgangssituation hergestellt. Entsprechend wiederholt sich dies, solange Schweißenergie benötigt wird.

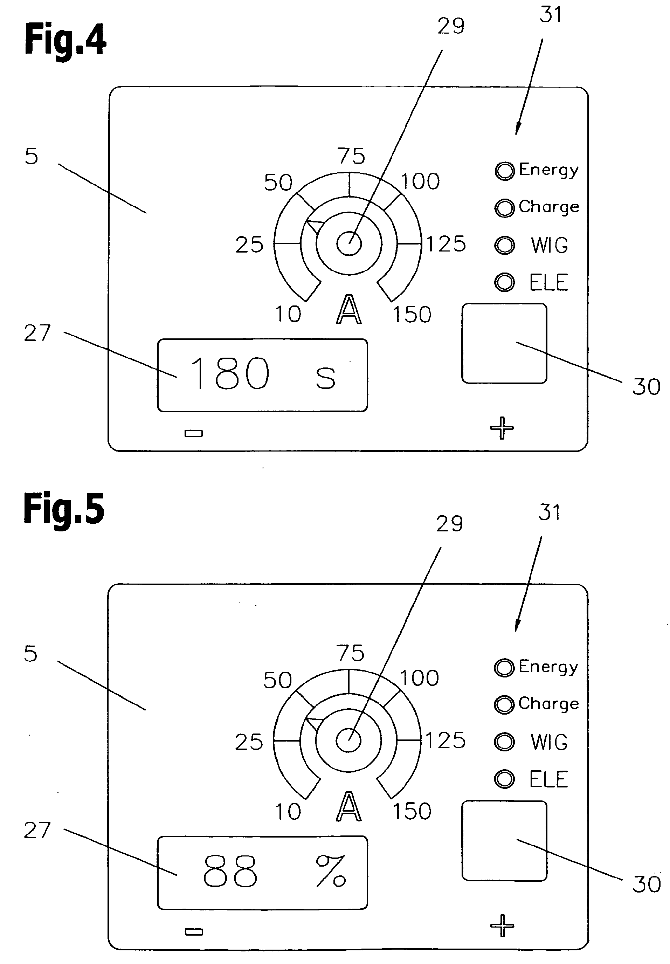

Da der erfindungsgemäße Leistungsteil 3 insbesondere zur Bereitstellung von Schweißenergie aus einem Energiespeicher 2 eingesetzt wird, steht dem Anwender gemäß der Kapazität des Energiespeichers 2 eine begrenzte Energie zur Verfügung. Die zur Verfügung stehende Energie bzw. davon abgeleitete Parameter können an einer Anzeige 27 an einer Ein- und/oder Ausgabevorrichtung 5 gemäß den Fig. 4 und 5 angezeigt werden. Bevorzugt wird dazu aus der Kapazität des Energiespeichers 2 und dem mit dem Einstellorgan 28 eingestellten Strom für den Aufbau des Lichtbogens 6 eine Zeit berechnet, wie lange die Energie für diesen Strom ausreicht. Die Berechnung eines Parameters, insbesondere der zur Verfügung stehenden Zeit, also der Restzeit, erfolgt beispielsweise wie im Folgenden beschrieben.

In Energiespeichern 2 gemäß dem Stand der Technik sind häufig sogenannte "State of Charge" (SOC) - und/oder "State of Health" (SOH) - Controller integriert. Diese Controller liefern entsprechend der Steuervorrichtung 4 des Geräts 1 insbesondere den aktuellen Ladezustand, welcher im Wesentlichen der Kapazität des Energiespeichers 2 entspricht. Des Weiteren ist der Steuervorrichtung 4 auch der eingestellte Strom für den Lichtbogen 6 bekannt. Dieser ist erforderlich, da die effektiv nutzbare Kapazität des Energiespeichers 2 stark von der Belastung abhängig ist. Die Belastung entspricht dabei dem eingestellten Strom. Beispielsweise ist bei einer Schweißung mit hohem Schweißstrom die Kapazität des Energiespeichers 2 schneller erschöpft, als bei einer Schweißung mit einem mittleren bzw. niedrigen Schweißstrom. Somit dienen die Kapazität des Energiespeichers 2 und der Strom zum Betreiben des Lichtbogens 6 als Grundbasis für die Berechnung.

Beispielsweise wird bei Inbetriebnahme des Geräts 1 aus Strom und Kapazität jene Zeit, wie lange mit diesem eingestellten Strom gearbeitet werden kann, berechnet und an der Anzeige 27 angezeigt. Dabei spricht man von einer Restzeit bzw. bei einem Schweißgerät von einer Restschweißzeit. Wird der Strom zum Betreiben des Lichtbogens 6, insbesondere der Schweißstrom, verändert, wird auch die Restschweißzeit entsprechend korrigiert. Da bei Inbetriebnahme eines Schweißgeräts noch kein Schweißprozess durchgeführt wurde, dient die angezeigte Restschweißzeit nur als Richtwert. Der tatsächliche Energieverbrauch ist dabei noch nicht berücksichtigt. Dieser ist insbesondere von der Länge des Lichtbogens 6, der verwendeten Schweißelektrode 32, der entsprechenden Schweißanwendung, usw. abhängig.

Wird nun ein Schweißprozess durchgeführt, berechnet die Steuervorrichtung 4 aufgrund der Istwerte von Schweißstrom und Schweißspannung bzw. Strom und Spannung des Energiespeichers 2 den tatsächlichen Energieverbrauch über eine bestimmte Zeit. Aufgrund dieses bisherigen Energieverbrauchs kann auf den zukünftigen Energieverbrauch hochgerechnet werden und somit die Restschweißzeit, wie lange noch geschweißt werden kann, korrigiert und der neue Wert an der Anzeige 27 angezeigt werden. Dies kann in regelmäßigen Zeitabständen, wie alle fünf, dreißig oder sechzig Sekunden während des Betreibens des Lichtbogens 6 erfolgen. An der Anzeige 27 wird die zuletzt berechnete Restschweißzeit bevorzugt solange angezeigt, bis ein neuer Schweißprozess gestartet, der Schweißstrom verändert oder das Gerät 1 ausgeschaltet wird.

Weiters kann zumindest der letzte berechnete Wert gespeichert werden, sodass bei der nächsten Inbetriebnahme dieser Wert an der Anzeige 27 angezeigt wird.

Um die Berechnung der Restschweißzeit noch genauer durchführen zu können, werden beispielsweise die in regelmäßigen Zeitabständen erfassten Istwerte während eines Schweißprozesses gespeichert. Nach dem Schweißprozess kann somit die während des Schweißprozesses verbrauchte Energie daraus berechnet werden, wobei dieser Wert des Energieverbrauchs dem eingestellten Schweißstrom während des Schweißprozesses zugeordnet wird. Wird nun mehrmals mit demselben eingestellten Schweißstrom ein Schweißprozess durchgeführt, kann ein Mittelwert des Energieverbrauchs gebildet werden. Da entsprechend auch zu jedem durchgeführten Schweißprozess die dafür benötigte Schweißzeit gespeichert wird, kann auch diese gemittelt werden. Auf diese Weise kann sozusagen eine Bibliothek angelegt werden, in welcher beispielsweise zu einer Vielzahl von möglichen Einstellungen des Schweißstroms ein Mittelwert des Energieverbrauchs über eine definierte Zeit gespeichert ist. Dabei kann eine derartige Bibliothek mit jedem durchgeführten Schweißprozess entsprechend aktualisiert werden. Auf diese Weise wird erreicht, dass bei Inbetriebnahme des Schweißgeräts 1 bzw. bei Veränderung des Schweißstroms der durch den eingestellten Schweißstrom bedingte Energieverbrauch aus Erfahrungswerten aus der Bibliothek im Wesentlichen bekannt ist. Aus der Kapazität des Energiespeichers 2 und dem in der Bibliothek gespeicherten Energieverbrauch pro Schweißprozess kann somit berechnet werden, wieviele Schweißprozesse mit dem eingestellten Schweißstrom und der zur Verfügung stehenden Kapazität des Energiespeichers 2 durchgeführt werden können. Da in der Bibliothek entsprechend zum Energieverbrauch auch die dazugehörige Schweißzeit gespeichert wird, kann die Restschweißzeit berechnet und an der Anzeige 27 angezeigt werden.

Die Restschweißzeit wird also iterativ berechnet bzw. ermittelt, da die noch zur Verfügung stehende Energie und der aktuelle Energieverbrauch in regelmäßigen Zeitabständen berücksichtigt werden. Somit wird auch die an der Anzeige 27 angezeigte Restschweißzeit regelmäßig angepasst, sodass eine relativ genaue Information über den Energiespeicher 2 zur Verfügung steht. Selbstverständlich kann die beschriebene Anzeige der Restschweißzeit auch für ähnliche Funktionen eingesetzt werden. Speziell ist die der Fall, wenn der Energiespeicher 2 nicht mit einem Modul zum Schweißen kombiniert wird, sondern beispielsweise mit einem Wechselrichtermodul oder einem Werkzeugmodul.

Von Vorteil ist es weiters, wenn eine Möglichkeit des Ladens des Energiespeichers 2 besteht. Wenn als Leistungsteil 3 ein Synchrontiefsetzsteller eingesetzt wird, kann dieser auch zum Laden des Energiespeichers 2 eingesetzt werden, indem der Synchronwandler als Hochsetzsteller betrieben wird. Der Synchrontiefsetzsteller wird dabei in umgekehrter Richtung betrieben, indem Eingang und Ausgang vertauscht werden. Somit sind für den Betrieb des Hochsetzstellers gemäß Fig. 2 der Schalter 11, die Drossel 12 und die Diode 28 von Bedeutung. Wird die Funktion der Diode 28 durch einen Schalter ersetzt, spricht man von einem Synchronhochsetzsteller. Somit wird der Schalter 11 bei beiden Betriebsarten des Synchronwandlers eingesetzt, sodass für die jeweilige Betriebsart eine unterschiedliche Steuerung erforderlich ist. Beispielsweise wird die Steuerung des Schalters 11 zum Betrieb als Hochsetzsteller aktiviert, indem an der Ein- und/oder Ausgabevorrichtung 5 ein Lademodus (Charge) mit einem Einstellorgan 30 gemäß den Fig. 4 und 5 aktiviert wird. Der aktivierte Lademodus wird beispielsweise mit einer Leuchtdiode 31 gekennzeichnet.

Bei aktiviertem Lademodus ist also die Grundvoraussetzung gegeben, dass der Energiespeicher 2 geladen werden kann. Dazu ist es erforderlich, eine entsprechende Spannungsquelle anzuschließen. Dies erfolgt am Ausgang des Synchrontiefsetzstellers, welcher in diesem Fall als Eingang des Synchronhochsetzstellers dient. Konkret handelt es sich beim Ausgang um die Schweißbuchsen, wenn der Leistungsteil 3 in einem Schweißgerät eingesetzt wird. Als Spannungsquelle kann beispielsweise die Batterie eines Fahrzeugs herangezogen werden. Im Bereich der Schweißbuchsen kann ein Verpolschutz vorgesehen sein, sodass der Leistungsteil 3 beim Anschluss der Spannungsquelle geschützt wird.

Gemäß der allgemein bekannten Funktion eines Hochsetzstellers muss die Spannung der Spannungsquelle niedriger als die Spannung des Energiespeichers 2 sein.

Nachdem der Lademodus aktiviert und die Spannungsquelle angeschlossen wurde, wird der Energiespeicher 2 geladen. Dazu wird der Schalter 11 derart angesteuert, dass die Spannung der Spannungsquelle auf die Spannung des Energiespeichers 2 hochgesetzt wird. Der Ladestrom für den Energiespeicher 2 fließt entsprechend über die Diode 28 zum Energiespeicher 2, wobei die oben erwähnten allfälligen SOC- und/oder SOH-Controller eine gleichmäßige Ladung einzelner Zellen des Energiespeichers 2 gewährleisten. Der Ladezustand wird von den SOC- und/oder SOH-Controllern überwacht und der Steuervorrichtung 4 mitgeteilt. Somit kann beispielsweise an der Anzeige 27 der Ladezustand in Prozent angezeigt werden. Demzufolge wird der Ladevorgang automatisch von der Steuervorrichtung 4 beendet, sobald der Energiespeicher 2 vollständig geladen ist. Dies wird an der Ein- und/oder Ausgabevorrichtung 5 der Anzeige 27 oder mittels einer der Leuchtdioden 31 (Energy) entsprechend angezeigt. Beispielsweise leuchtet die Leuchtdiode 31 (Energy) rot, wenn der Energiespeicher 2 geladen werden muss, bzw. grün, wenn der Energiespeicher 2 vollständig geladen ist. Somit kann mit dem Einstellorgan 30 vom Lademodus beispielsweise wieder in den Schweißmodus (WIG od. ELE) gewechselt werden.

Selbstverständlich kann das Schweißgerät auch einen entsprechenden Anschluss aufweisen, über den der Energiespeicher 2 mit einem Ladegerät geladen werden kann. In diesem Fall ist die Betriebsart des Synchronwandlers als Hochsetzsteller nicht erforderlich.

Weiters ist es möglich, dass am Gerät 1, insbesondere Schweißgerät, ein zusätzlicher Ausgang in Form einer Niederspannungssteckdose angeordnet ist, die bevorzugt parallel zu den Schweißausgängen bzw. Schweißbuchsen am Leistungsteil 3 angeschlossen ist, d.h. dass am Schweißgerät 1 ein Ausgang zum Versorgen zusätzlicher Verbraucher angeordnet ist. Somit können weitere Verbraucher, wie Lampen, Neonröhren, Trennschleifer, insbesondere Flex-Module, Klebepistolen, Bohrmaschinen bzw. Bohr-Module, Stichsägen bzw. Stichsäge-Module, usw. angeschlossen werden.

Selbstverständlich kann im Gerät 1 bzw. Schweißgerät ein Hochsetzsteller und ein DC/AC-Modul angeordnet sein, und somit der zusätzliche Ausgang als Wechselspannungsausgang, insbesondere als eine 240V- Steckdose, ausgebildet sein. Dabei können ein oder mehrere Niederspannungsausgänge und ein Wechselspannungsausgang am Gerät 1, insbesondere Schweißgerät, angeordnet werden und somit weitere Geräte, die mit entsprechender Spannung betrieben werden, direkt am Gerät 1 angeschlossen werden. Werden derartige Zusatzgeräte angeschlossen und verwendet, so kann, wie zuvor beschrieben, auch deren Energieverbrauch ermittelt und dargestellt werden. Hierzu ist es möglich, dass eine allgemeine Anzeige für die noch zur Verfügung stehende Energie und/oder eine Anzeige für die Zeitdauer eines oder mehrerer Schweißvorgänge vorhanden ist, sodass der Benutzer optimal die vorhandene Energie nützen kann.

Der Vorteil einer derartigen Ausstattung des Geräts 1 bzw. Schweißgeräts liegt darin, dass nunmehr der Benutzer ein Schweißgerät zum Verbinden von Materialien zur Verfügung hat, wo noch zusätzlich weitere Geräte für weitere Arbeiten, wie das Trennen von Materialien, angeschlossen werden können, wobei eine gemeinsame Stromversorgung vorhanden ist.

## Patentansprüche

1. Verfahren zum Betreiben eines Schweißgeräts (1) zur Bildung eines Lichtbogens (6) mit einem Energiespeicher (2), wobei zur Umwandlung der Energie des Energiespeichers (2) zumindest ein eingangsseitig mit dem Energiespeicher (2) verbundener Schalter (9) eines Tiefsetzstellers von einer Steuervorrichtung (4) geregelt ein- und ausgeschaltet wird, **dadurch gekennzeichnet, dass** als Tiefsetzsteller zum Betreiben des Lichtbogens (6) mit einem Ausgangsstrom (Ia) ein Synchronwandler verwendet wird, wobei der Ausgangsstrom (Ia) über eine Drossel (12) geleitet wird, und der zumindest eine Schalter (9) des als Leistungsteil (3) ausgebildeten Synchronwandlers ausgangsseitig mit einer Entlastungsschaltung (10) verbunden wird, sodass zumindest der Schalter (9) entlastet ein- und ausgeschaltet wird, indem beim Einschaltvorgang des zumindest einen Schalters (9) um die Drossel (12) wieder zu laden der Stromanstieg durch eine in Serie zum Schalter (9) angeordnete Drossel (13) begrenzt sowie die Drossel (13) geladen wird und die Spannung am ausgangsseitigen Anschluss der Drossel (13) bis zur Spannung des Energiespeichers (2) ansteigt, nach dem Einschaltvorgang eine durch eihen Schalter (17) gebildete Steuereinheit (16) aktiviert wird und zumindest ein ausgangsseitig dem Schalter (9) zugeordneter Kondensator (22) während des eingeschalteten Schalters (9) auf die Spannung des Energiespeichers (2) und ein ausgangsseitig des Schalters (17) angeordneter Kondensator (14) über eine Drossel (20) geladen wird, nach vollständiger Ladung des dem Schalter (9) ausgangsseitig zugeordneten Kondensators (22) der Schalter (17) geöffnet wird, worauf der Kondensator (14) mit der in der Drossel (20) gespeicherten Energie bis zur Spannung des Energiespeichers (2) geladen wird, beim Ausschaltvorgang des zumindest einen Schalters (9) bei deaktiviertem Schalter (17) der Steuereinheit (16) die ausgangsseitig am Schalter (9) anliegende Spannung über den Kondensator (22) im Wesentlichen auf der Spannung des Energiespeichers (2) gehalten wird, sodass der zumindest eine Schalter (9) im Wesentlichen spannungsfrei ausgeschaltet wird, und die Energie der Drossel (13) und des Kondensators (14) dem Ausgangsstrom (Ia) zugeführt wird.

2. Verfahren nach Anspruch 1, **dadurch gekennzeichnet, dass** der Schalter (17) der Steuereinheit (16) entlastet deaktiviert wird, indem der Schalter (17) ausgangsseitig mit zumindest einem Kondensator (18) und einer Diode (19) verbunden wird, und der Schalter (17) erst nach einem Aufladen des zumindest einen ausgangsseitig mit dem Schalter (17) verbundenen Kondensators (18) deaktiviert wird.

3. Verfahren nach Anspruch 1 oder 2, **dadurch gekennzeichnet, dass** der Synchronwandler auch zum Laden des Energiespeichers (2) als Hochsetzsteller eingesetzt wird, indem der Eingang und der Ausgang des Synchronwandlers vertauscht werden.

4. Schweißgerät (1) mit einem Energiespeicher (2), einem Brenner (7) zur Bildung eines Lichtbogens (6), einer mit einer Steuervorrichtung (4) verbundenen Ein- und/oder Ausgabevorrichtung (5) zur Einstellung des Schweißstroms, und einem Leistungsteil (3) zur Umwandlung der Energie des Energiespeichers (2) zum Betreiben eines Lichtbogens (6), und mit einem Tiefsetzsteller mit zumindest einem geregelt ein- und auszuschaltenden Schalter (9), welcher zumindest eine Schalter (9) eingangsseitig mit dem Energiespeicher (2) verbunden ist, **dadurch gekennzeichnet, dass** der Tiefsetzsteller durch einen Synchronwandler zur Bildung eines über eine Drossel (12) geführten Ausgangsstroms (Ia) zum Betreiben des Lichtbogens (6) gebildet ist, und der zumindest eine Schalter (9) des als Leistungsteil (3) ausgebildeten Synchronwandlers ausgangsseitig mit einer Entlastungsschaltung (10) mit Speicherkomponenten zum entlasteten Ein- und Ausschalten des zumindest einen Schalters (9) verbunden ist, wobei zur Entlastung des Einschaltvorgangs des zumindest einen Schalters (9) um die Drossel (12) wieder zu laden, eine mit dem Schalter (9) in Serie geschaltete Drossel (13) und zur Entlastung des Ausschaltvorgangs des zumindest einen Schalters (9) eine mit dem zumindest einen Schalter (9) verbundene Diode (23) und ein Kondensator (22), welche mit einer durch einen Schalter (17) gebildete Steuereinheit (16) verbunden sind, vorgesehen sind, wobei ausgangsseitig des Schalters (17) eine Drossel (20) und ein Kondensator (14) angeordnet sind, und der Schalter (17) mit der Steuervorrichtung (4) verbunden ist und derart regelbar ist, dass der zumindest eine Schalter (9) entlastet ein- und ausschaltbar ist, wobei nach dem Einschaltvorgang der Schalter (17) der Steuereinheit (16) aktiviert wird, der ausgangsseitig dem Schalter (9) zugeordnete Kondensator (22) während des eingeschalteten Schalters (9) auf die Spannung des Energiespeichers (2) und ein ausgangsseitig des Schalters (17) angeordneter Kondensator (14) über eine Drossel (20) geladen wird, nach vollständiger Ladung des dem Schalter (9) ausgangsseitig zugeordneten Kondensators (22) der Schalter (17) geöffnet wird, worauf der Kondensator (14) mit der in der Drossel (20) gespeicherten Energie bis zur Spannung des Energiespeichers (2) geladen wird, beim Ausschaltvorgang des zumindest einen Schalters (9) bei deaktiviertem Schalter (17) der Steuereinheit (16) die ausgangsseitig am Schalter (9) anliegende Spannung über den Kondensator (22) im Wesentlichen auf der Spannung des Energiespeichers (2) gehalten wird, sodass der zumindest eine Schalter (9) im Wesentlichen spannungsfrei ausgeschaltet wird, und die Energie der Drossel (13) und des Kondensators (14) dem Ausgangsstrom (Ia) zugeführt wird.

5. Schweißgerät (1) nach Anspruch 4, **dadurch gekennzeichnet, dass** die Entlastungsschaltung (10) im Synchronwandler integriert ist.

6. Schweißgerät (1) nach Anspruch 4 oder 5, **dadurch gekennzeichnet, dass** eine Einrichtung zum Laden des Energiespeichers (2) vorgesehen ist.

7. Schweißgerät (1) nach Anspruch 6, **dadurch gekennzeichnet, dass** die Ladeeinrichtung durch den Synchronwandler mit vertauschtem Eingang und Ausgang gebildet ist, sodass der Synchronwandler zum Laden des Energiespeichers (2) als Hochsetzsteller verwendbar ist.

8. Schweißgerät (1) nach Anspruch 6 oder 7, **dadurch gekennzeichnet, dass** vorzugsweise an der Ein- und/oder Ausgabevorrichtung (5) eine Leuchtdiode (31) zur Anzeige des Ladezustandes des Energiespeichers (2) vorgesehen ist.

9. Schweißgerät (1) nach einem der Ansprüche 6 bis 8, **dadurch gekennzeichnet, dass** vorzugsweise an der Ein- und/oder Ausgabevorrichtung (5) ein Einstellorgan (30) zum Ein- und Ausschalten der Ladeeinrichtung vorgesehen ist.

## Claims

1. A method for operating a welding device (1) for the formation of an arc (6) with an energy storage (2), wherein for the conversion of the energy of the energy storage (2) at least one switch (9) of a step-down converter is switched on and off by a control device (4) in a controlled manner, said at least one switch (9) being connected to the energy storage (2) at the input end, **characterized in that** a synchronous converter is used as the step-down converter for operating the arc (6) with an output current (Ia), wherein the output current (Ia) is guided via an inductor (12), and that the at least one switch (9) of the synchronous converter that is designed as a power unit (3) is connected to a snubber circuit (10) at the output end such that at least the switch (9) is switched on and off in a snubbed state, **in that** at the switch-on process of the at least one switch (9), in order to charge the inductor (12) again, the current rise is limited by an inductor (13) arranged in series to the switch (9) and the inductor (13) is charged and the voltage at the connection of the inductor (13) at the output end increases up to the voltage of the energy storage (2); after the switch-on process a control unit (16) formed by a switch (17) is activated, and at least one capacitor (22) allocated to the switch (9) at the output end is charged up to the voltage of the energy storage (2) while the switch (9) is in the switched-on state, and a capacitor (14) arranged at the output end of the switch (17) is charged via a inductor (20); after the complete charging of the capacitor (22) allocated to the switch (9) at the output end the switch (17) is opened, whereupon the capacitor (14) is charged with the energy stored in the inductor (20) up to the voltage of the energy storage (2); at the switch-off process of the at least one switch (9), with the switch (17) of the control unit (16) being deactivated, the voltage being applied at switch (9) at the output end is held substantially at the voltage of the energy storage (2) by means of the capacitor (22), so that the at least one switch (9) is switched off substantially voltage-free, and the energy of the inductor (13) and of the capacitor (14) is supplied to the output current (Ia).

2. The method according to claim 1, **characterized in that** the switch (17) of the control unit (16) is deactivated in a snubbed state, **in that** the switch (17) is connected to at least a capacitor (18) and a diode (19) at the output end, and that the switch (17) is deactivated only after a charging of the at least one capacitor (18) connected to the switch (17) at the output end.

3. The method according to claim 1 or 2, **characterized in that** the synchronous converter is also used for charging the energy storage (2) as a step-up converter **in that** the input and the output of the synchronous converter are exchanged.

4. A welding device (1) comprising an energy storage (2), a torch (7) for the formation of an arc (6), an input and/or output device (5) for setting the welding current, said input and/or output device (5) being connected to a control device (4), and a power unit (3) for converting the energy of the energy storage (2) for operating an arc (6), and with a step-down converter having at least one switch (9) which can be switched on and off in a controlled manner, said at least one switch (9) being connected to the energy storage (2) at the input end, **characterized in that** the step-down converter is formed by a synchronous converter for the formation of an output current (Ia) - which is guided via an inductor (12) - for operating the arc (6), and the at least one switch (9) of the synchronous converter that is designed as a power unit (3) is connected at the output end with a snubber circuit (10) having storage components for the switching on and off of the at least one switch (9) in a snubbed state, wherein, for the unloading of the switch-on process of the at least one switch (9), in order to charge the inductor (12) again, an inductor (13) connected in series with the switch (9) is provided, and, for the snubbing of the switch-off process of the at least one switch (9), a diode (23) connected with the at least one switch (9) and a capacitor (22) which is connected to a control unit (16) formed by a switch (17) are provided, wherein at the output end of the switch (17) an inductor (20) and a capacitor (14) are arranged and the switch (17) is connected with the control device (4) and can be controlled such that the at least one switch (9) can be switched on and off in a snubbed state, wherein after the switch-on process the switch (17) of the control unit (16) will be activated, the capacitor (22) allocated to the switch (9) at the output end will be charged up to the voltage of the energy storage (2) while the switch (9) is in the switched-on state, and a capacitor (14) arranged at the output end of the switch (9) will be charged via an inductor (20), after a complete charging of the capacitor (22) allocated to the switch (9) at the output end the switch (17) will be opened, whereupon the capacitor (14) is charged up to the voltage of the energy storage (2) with the energy stored in the inductor (20), at the switch-off process of the at least one switch (9), with the switch (17) of the control unit (16) being deactivated, the voltage being applied at switch (9) at the output end is held substantially at the voltage of the energy storage (2) by means of the capacitor (22) so that the at least one switch (9) is switched off substantially voltage-free, and the energy of the inductor (13) and of the capacitor (14) is supplied to the output current (Ia).

5. The welding device (1) according to claim 4, **characterized in that** the snubber circuit (10) is integrated in the synchronous converter.

6. The welding device (1) according to claim 4 or 5, **characterized in that** a means for charging the energy storage (2) is provided.

7. The welding device (1) according to claim 6, **characterized in that** the charging means is formed by the synchronous converter with the input and the output being exchanged so that the synchronous converter can be used as a step-up converter for charging the energy storage (2).

8. The welding device (1) according to claim 6 or 7, **characterized in that** preferably at the input and/or output device (5) a light emitting diode (31) for indicating the charging state of the energy storage (2) is provided.

9. The welding device (1) according to anyone of claims 6 to 8, **characterized in that** preferably at the input and/or output device (5) a setting element (30) for switching the charging means on or off is provided.

## Revendications

1. Procédé d'exploitation d'un appareil de soudure (1) pour la formation d'un arc électrique (6) avec un accumulateur d'énergie (2), au moins un interrupteur (9), relié côté entrée avec l'accumulateur d'énergie, d'un convertisseur abaisseur, étant mis en marche et arrêté de manière régulée par un dispositif de commande (4) pour la conversion de l'énergie de l'accumulateur d'énergie (2), **caractérisé en ce que** le convertisseur abaisseur utilisé pour l'exploitation de l'arc électrique (6) avec un courant de sortie (la) peut être un convertisseur synchrone, le courant de sortie (la) étant conduit par l'intermédiaire d'une bobine (12) et l'au moins un interrupteur (9) du convertisseur synchrone conçu comme un composant de puissance (3) étant relié côté sortie avec un circuit de décharge (10), de façon à ce qu'au moins l'interrupteur (9) soit mis en marche et arrêté de manière déchargée, grâce au fait que, lors du processus de mise en marche de l'au moins un interrupteur (9), afin de recharger la bobine (12), l'augmentation du courant est limitée par une bobine (13) branchée en série avec l'interrupteur (9) et la bobine (13) est chargée et la tension au niveau du branchement côté sortie de la bobine (13) augmente jusqu'à la tension de l'accumulateur d'énergie (2), après le processus de mise en marche, une unité de commande (16), constituée par un interrupteur (17), est activée et au moins un condensateur (22), correspondant à l'interrupteur (9) côté sortie, est chargé, pendant la mise en marche de l'interrupteur (9), à la tension de l'accumulateur d'énergie (2) et un condensateur (14), disposé côté sortie de l'interrupteur (17), est chargé par l'intermédiaire d'une bobine (20), après la charge complète du condensateur (22), correspondant à l'interrupteur (9) côté sortie, l'interrupteur (17) est ouvert, ce qui permet de charger le condensateur (14) avec l'énergie accumulée dans la bobine (20) jusqu'à la tension de l'accumulateur d'énergie (2), lors du processus d'arrêt de l'au moins un interrupteur (9), lorsque l'interrupteur (17) de l'unité de commande (16) est désactivé, la tension appliquée côté sortie au niveau de l'interrupteur (9) étant maintenue par l'intermédiaire du condensateur (22) globalement à la tension de l'accumulateur d'énergie (2), de façon à ce que l'au moins un interrupteur (9) soit mis globalement hors tension et l'énergie de la bobine (13) et du condensateur (14) étant introduite dans le courant de sortie (la).

2. Procédé selon la revendication 1, **caractérisé en ce que** l'interrupteur (17) de l'unité de commande (16) est désactivé de manière déchargée grâce au fait que l'interrupteur (17) est relié côté sortie avec au moins un condensateur (18) et une diode (19) et l'interrupteur (17) n'est désactivé qu'après la charge de l'au moins un condensateur (18), relié côté sortie avec l'interrupteur (17).

3. Procédé selon la revendication 1 ou 2, **caractérisé en ce que** le convertisseur synchrone est utilisé également pour la charge de l'accumulateur d'énergie (2) en tant que convertisseur élévateur en intervertissant l'entrée et la sortie du convertisseur synchrone.

4. Appareil de soudure (1) avec un accumulateur d'énergie (2), un brûleur (7) pour la formation d'un arc électrique (6), un dispositif d'entrée et/ou de sortie (5), relié avec un dispositif de commande (4), pour le réglage du courant de soudure, et une partie de puissance (3) pour la conversion de l'énergie de l'accumulateur d'énergie (2) pour l'exploitation d'un arc électrique (6), et avec un convertisseur abaisseur avec au moins un interrupteur (9) pouvant être mis en marche et arrêté de manière régulée, cet au moins un interrupteur (9) étant relié côté entrée avec l'accumulateur d'énergie (2), **caractérisé en ce que** le convertisseur abaisseur est constitué d'un convertisseur synchrone pour la formation d'un courant de sortie (la) conduit par l'intermédiaire d'une bobine (12) pour l'exploitation de l'arc électrique (6) et l'au moins un interrupteur (9) du convertisseur synchrone, conçu comme partie de puissance (3), est relié côté sortie avec un circuit de décharge (10) avec des composants d'accumulation pour la mise en marche et l'arrêt déchargé de l'au moins un interrupteur (9), pour la décharge du processus de mise en marche de l'au moins un interrupteur (9), afin de recharger la bobine (12), une bobine (13), branchée en série avec l'interrupteur (9) et, pour la décharge du processus d'arrêt de l'au moins un interrupteur (9), une diode (23), reliée avec l'au moins un interrupteur (9), et un condensateur (22), qui est relié avec une unité de commande (16) constituée d'un interrupteur (17), sont prévus, une bobine (20) et un condensateur (14) étant disposés côté sortie de l'interrupteur (17) et l'interrupteur (17) étant relié avec le dispositif de commande (4) et pouvant être régulé de façon à ce que l'au moins un interrupteur (9) puisse être mis en marche et arrêté de manière déchargée, après le processus de mise en marche, l'interrupteur (17) de l'unité de commande (16) étant activé, le condensateur (22), correspondant, côté sortie, à l'interrupteur (9) étant chargé, lorsque l'interrupteur (9) est mis en marche, à la tension de l'accumulateur d'énergie (2) et un condensateur (14), disposé côté sortie de l'interrupteur (17) étant chargé par l'intermédiaire d'une bobine (20), après la charge complète du condensateur (22), correspondant, côté sortie, à l'interrupteur (9), l'interrupteur (17) étant ouvert, ce qui permet de charger le condensateur (14) avec l'énergie accumulée dans la bobine (20), jusqu'à la tension de l'accumulateur d'énergie (2), lors du processus d'arrêt de l'au moins un interrupteur (9), lorsque l'interrupteur (17) de l'unité de commande (16) est désactivé, la tension appliquée côté sortie au niveau de l'interrupteur (9) étant maintenue, par l'intermédiaire du condensateur (22), globalement à la tension de l'accumulateur d'énergie (2), de façon à ce que l'au moins un interrupteur (9) soit mis globalement hors tension et l'énergie de la bobine (13) et du condensateur (14) soit introduite dans le courant de sortie (la).

5. Appareil de soudure (1) selon la revendication 4, **caractérisé en ce que** le circuit de décharge (10) est intégré dans le convertisseur synchrone.

6. Appareil de soudure (1) selon la revendication 4 ou 5, **caractérisé en ce qu'**un dispositif de charge de l'accumulateur d'énergie (2) est prévu.

7. Appareil de soudure (1) selon la revendication 6, **caractérisé en ce que** le dispositif de charge est constitué du convertisseur synchrone avec interversion de l'entrée et de la sortie, de façon à ce que le convertisseur synchrone puisse être utilisé pour la charge de l'accumulateur d'énergie (2) en tant que convertisseur élévateur.

8. Appareil de soudure (1) selon la revendication 6 ou 7, **caractérisé en ce que**, de préférence, au niveau du dispositif d'entrée et/ou de sortie (5), une diode électroluminescente (31) est prévue pour l'affichage de l'état de charge de l'accumulateur d'énergie (2).

9. Appareil de soudure (1) selon l'une des revendications 6 à 8, **caractérisé en ce que**, de préférence, au niveau du dispositif d'entrée et/ou de sortie (5), un organe de réglage (30) est prévu pour la mise en marche et l'arrêt du dispositif de charge.
